(19) Europäisches Patentamt / European Patent Office / Office européen des brevets

(11) **EP 4 474 929 A1**

(12) **EUROPEAN PATENT APPLICATION**

(43) Date of publication:
**11.12.2024 Bulletin 2024/50**

(21) Application number: **23177753.3**

(22) Date of filing: **06.06.2023**

(51) International Patent Classification (IPC):
***G05B 19/418*** (2006.01)

(52) Cooperative Patent Classification (CPC):
**G05B 19/41865;** G05B 2219/32021;
G05B 2219/34315; G05B 2219/45191

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Rieter AG**
**8406 Winterthur (CH)**

(72) Inventor: **BAHLMANN, Bernd**
**86529 Schrobenhausen (DE)**

(54) **METHOD FOR STARTING UP ALL OR PART OF A SPINNING MILL**

(57) The present invention relates to a method for starting up all or part of a spinning mill $S$. Said spinning mill $S$ may comprise a set of main machines ($M, j$) and/or a set of auxiliary machines ($N, l$).

Said method may start up at least one main machine ($M,i$) of said set of main machines ($M,j$) and/or at least one auxiliary machine ($N,k$) of at a set of auxiliary machines ($N,l$) alone or in groups while a sum comprising said main functional characteristic $f_{(M,i)}\left(t_{j-i}^{(M,i)}\right)$ of said at least one main machine ($M,i$) and/or said auxiliary functional characteristic $f_{(N,k)}\left(t_{l-k}^{(N,k)}\right)$ of at least one auxiliary machine ($N,k$) may be inferior or equal to said limit operating parameters $y(t'_{j,l})$ of said spinning mill $S$.

$$\sum_{i}^{v} f_{(M,i)}\left(t_{v-i}^{(M,i)}\right) + \sum_{k}^{w} f_{(N,k)}\left(t_{w-k}^{(N,k)}\right)$$

FIG. 9

**Description**

**Technical field of the invention**

The present invention relates to a spinning mill comprising a set of different machines having different functional characteristics. More particularly, the present invention is dedicated, but not exclusively, to a method for operating a spinning mill having several textile machines which each have a functional characteristic for regular production operation.

**Technological background**

Despite the investment and network designs of the electrical grid, its power delivery infrastructures suffer aging across the world. One of the factors contributing to the current state of the electricity system and its consequences may be aging equipment, which may lead to customer high interruption rates, and/or traditional tools for power delivery planning and engineering, which are ineffective in addressing current problems of aged equipment, obsolete system layouts, and modern deregulated loading levels.

These different factors may cause a power failure, and the sudden shutdown of a spinning mill, which can have dramatic consequences for the production.

Indeed, after a power failure, it may be really difficult to star up the spinning mill, since it is not obvious which machine should be started first in order to minimize the downtime. For instance, there is some machines, which have a high-power consumption for a few minutes, when others may increase gradually. If the number of machines is too large and/or too heterogeneous, this may endanger the electrical network, and a power failure may occur again. Another challenge may be to decide, which machine should be started first because of its importance as other machines depend on it or because of its importance for the production.

Partly for these reasons, it is difficult to restart or start up a spinning mill after a power failure without accidentally increasing the downtime.

**Summary of the invention**

In order to achieve this objective, the present invention may provide, according to an aspect of the invention, a method for starting up all or part of a spinning mill comprising a set of main machines; wherein said spinning mill comprises an said operating parameters and a limit operating parameter and wherein said set of main machines comprises at least one main machine including a main functional characteristic, wherein said at least one main machine may be started up alone or in groups while a sum comprising said main functional characteristics of said at least one started up main machine may be inferior or equal to said operating parameters and/or of said limit operating parameter.

Thus, this arrangement may allow said method to start up all or part of a spinning mill by starting up simultaneously or sequentially said at least one main machine alone or in groups such as to respect said operating parameter and/or said limit operating parameter of said spinning mill.

According to an embodiment, said spinning mill comprises a next operating parameter and said operating parameter may be different to said next operating parameters.

Thanks to this configuration, said method may start up all or part of a spinning mill by adjusting said sum such as to respect said next operating parameter and/or said limit operating parameter of said spinning mill.

According to an embodiment, said spinning mill comprising a set of auxiliary machines; wherein said set of auxiliary machines comprises at least one auxiliary machine including an auxiliary functional characteristic, wherein said at least one auxiliary machine ($(N, k)$) may be started up alone or in groups while said sum comprising said auxiliary functional characteristics of the at least one started up auxiliary machine may be inferior or equal to said operating parameters and/or said limit operating parameter.

Thanks to this configuration, said method may start simultaneously or sequentially said at least one auxiliary machine alone or in groups additionally or alternatively to said at least one main machine such as to respect said operating parameter and/or said limit operating parameter of said spinning mill.

According to an embodiment, said at least one main machine comprises at least one first main machine including a first main functional characteristic and at least one second main machine including a second main functional characteristic, wherein said first main functional characteristic may be configured to be started up before said second main functional characteristic.

Thanks to this configuration, said at least one first main machine may start sequentially alone or in groups before said at least one second main machine such as to respect said operating parameter and/or said limit operating parameter of said spinning mill.

According to an embodiment, said at least one auxiliary machines comprises at least one first auxiliary machine including a first auxiliary functional characteristic and at least one second auxiliary machine including a second auxiliary functional characteristic wherein said first auxiliary functional characteristic may be configured to be started up before said second auxiliary functional characteristic.

Thanks to this configuration, said at least one first auxiliary machine to start sequentially alone or in groups before said at least one second auxiliary machine such as to respect said operating parameter and/or said limit operating parameter of said spinning mill.

According to an embodiment, said method comprises a determination of at least one next machine among said at least one main machine, said at least one first main machine, said at least one second main machine, said at least one auxiliary machine, said at least one first auxiliary machine and/or at least one second auxiliary machine to start up alone or in groups such as said sum comprising the functional characteristic of said at least one started up next machine may be inferior or equal to said next operating parameters.

Thanks to this configuration, said at least one main machine may start sequentially alone or in groups before said at least one auxiliary machine such as to respect said next operating parameters and/or said limit operating parameters of said spinning mill.

According to an embodiment, said determination comprises a simulation of said sum inferior or equal to said operating parameters comprising said at least one next machine to start up alone or in group among said at least one main machine, said at least one first main machine, said at least one second main machine, said at least one auxiliary machine, said at least one first auxiliary machine and/or at least one second auxiliary machine.

Thanks to this configuration, said method may find an optimum by simulating different configurations and/or by taking in account newly available machine among said at least one main machine and/or said at least one auxiliary machine into said sum said next operating parameters such as to respect said next operating parameters and/or said limit operating parameters of said spinning mill such as to respect said next operating parameters and/or at least one limit of said next operating parameters of said spinning mill.

According to an embodiment, said simulation comprises a permutation of at least two next machines among said at least one main machine, said at least one first main machine, said at least one second main machine, said at least one auxiliary machine, said at least one first auxiliary machine and/or at least one second auxiliary machine to start up in groups such as said sum comprising the functional characteristic of said at least two started up next machine may be inferior or equal to said next operating parameters.

Thanks to this configuration, said method to find an optimum by simulating different configurations and/or arrangements by changing the starting up order among said at least one main machine and/or said at least one auxiliary machine such as to respect said next operating parameters and/or said limit operating parameters of said spinning mill.

According to an embodiment, said simulation comprises a combination of at least two next machines among said at least one main machine, said at least one first main machine, said at least one second main machine, said at least one auxiliary machine, said at least one first auxiliary machine and/or at least one second auxiliary machine to start up in groups such as said sum comprising the functional characteristic of said at least two started up next machine may be inferior or equal to said next operating parameters.

Thanks to this configuration, said method may find an optimum by simulating different combination by starting up at least two among said at least one main machine and/or said at least one auxiliary machine such as to respect said next operating parameters and/or said limit operating parameters of said spinning mill.

According to an embodiment, said at least one first main machine and/or said at least one second main machine comprises at least one main machine configured to transport and/or to stock raw materials, fibers, or yarns.

Advantageously, said at least one main machine may be started independently since they do no transform raw materials into yarn and/or since they are needed to feed between them.

According to an embodiment, said at least one first auxiliary machine and/or at least one second auxiliary machine comprises at least one auxiliary machine configured to produce and/or to transform raw materials, fibers, or yarns.

Advantageously, said at least one auxiliary machine may be needed to transform the materials started independently since they do no transform raw materials into yarn and/or since they are needed to feed between them.

According to an embodiment, said at least one machine among said at least one main machine and/or said at least one auxiliary machine, and/or said at least one next machine among said at least one first main machine, said at least one second main machine, said at least one first auxiliary machine and/or at least one second auxiliary machine are configured to start up simultaneously or sequentially.

Thanks to this configuration, said method may start up said at least one main machine and/or said at least one auxiliary machine sequentially or simultaneously in groups such as to respect said next operating parameters and/or said limit operating parameters of said spinning mill.

According to an embodiment, said operating parameter and/or said next operating parameters comprises a voltage, a current, a power, a humidity, a Temperature or at least one groups of the previous.

Thanks to this configuration, said next operating parameters and/or said next operating parameters of said spinning mill may be defined the limit.

According to an embodiment, said functional characteristic among said main functional characteristic and/or said auxiliary functional characteristic comprises a weight, a reference weight, a Tape weight, a production or at least one groups of the previous.

Thanks to this configuration, said main functional characteristic and/or said auxiliary functional characteristic may be defined.

According to an embodiment, said at least one machine among said at least one main machine, said at least one first main machine, said at least one second main machine, said at least one auxiliary machine, said at least one first auxiliary machine and/or at least one second auxiliary machine, may communicate and/or may sense, preferably in real-time, said functional characteristic among said main functional characteristic, said first main functional characteristic, said second main functional characteristic, said auxiliary functional characteristic, said first auxiliary functional characteristic and/or said auxiliary functional characteristic respectively.

Thanks to this configuration, said at least one machine may give in real-time feedback about said functional characteristic.

In order to achieve this objective, the present invention may provide, according to an aspect of the invention, a computer implemented method for starting up all or part of a spinning mill comprising a set of main machines and/or a set of auxiliary machines; wherein said spinning mill comprises an operating parameter, wherein said set of main machines comprises at least one main machine including a main functional characteristic, and/or wherein said set of auxiliary machines comprises at least one auxiliary machine including an auxiliary functional characteristic, wherein said computer implemented method comprising a/an:

- establishment said operating parameter for a predetermined time period or time point as a limit;

- selection an amount of machine among said at least one main machine and/or said at least one auxiliary machine to start up alone or in groups;

- comparison of said operating parameter with a sum of said main functional characteristic, and/or said auxiliary functional characteristic of said amount of selected machines;

- starting up said amount of selected machines such as said sum of said functional characteristics of said selected machines may be inferior or equal to said operating parameters at said predetermined time period or said time point.

Thus, this arrangement may allow said computer implemented method to start up all or part of a spinning mill by starting up simultaneously or sequentially said at least one main machine and/or said at least one auxiliary machine alone or in groups such as to respect said operating parameter and/or at least one limit of said operating parameter of said spinning mill. Indeed, said computer implemented method may measure the consumption and may start up the loads in a certain order as it may be the most favorable and/or effective for said operating parameters, respectively for the resource capacity of said spinning mill. Thanks to the lack of power failure, said spinning mill may be restarted quickly without putting a heavy load on the power grid, for example, and at the same time may keep costs as low as possible.

In order to achieve this objective, the present invention may provide, according to an aspect of the invention, a Central unit for starting up all or part of a spinning mill and comprising:

- a communication device; said communication device is configured to communicate with at least one machine of a set of main machines and/or a set of auxiliary machines of a spinning mill; and,

- a control device; said control device comprising storage elements and a processing unit configured to receive data information and/or to transmit a startup command to said at least one machine of said set of main machines and/or said set of auxiliary machines, where said control device is adapted to control said startup of said at least one machine;

said processing unit is configured to implement said method according to an embodiment of the invention and/or to execute said computer implemented method according to an embodiment of the invention such as to start up said at least one machine alone or in a group while a sum comprising said main functional characteristics and/or said auxiliary functional characteristics of said at least one started up machine is inferior or equal to said operating parameters and/or of said limit operating parameter of said spinning mill.

Thus, this arrangement may allow said Central unit to start up all or part of a spinning mill by starting up simultaneously or sequentially said at least one main machine and/or said at least one auxiliary machine alone or in groups such as to respect said operating parameter and/or at least one limit of said operating parameter of said spinning mill. Indeed, said Central unit may measure the consumption or the power consumption, for example, may be communicated and may start up the loads in a certain order as it may be the most favorable and/or effective for said operating parameters, respectively for the resource capacity of said spinning mill. Thanks to the lack of power failure, said spinning mill may be restarted quickly without putting a heavy load on the power grid, for example, and at the same time may keep costs as low as possible.

**Brief description of the drawings**

The foregoing and other purposes, features, aspects and advantages of the invention will become apparent from the following detailed description of embodiments, given by way of illustration and not limitation with reference to the accompanying drawings, in which the same reference refer to similar elements or to elements having similar functions, and in which:

- Figure 1 may describe an operating parameter $y(t_{v,w})$ of a spinning mill S may have an operating parameter $y(t_{v,w})$,
- Figures 2 to 4 may illustrate three main functional characteristics $f_a$, $f_b$, and $f_c$ of a set of three main machines $(M, 3)$, $\{a, b, c\}$ respectively;
- Figures 5 to 8 may depict four auxiliary functional characteristics $f_d$, $f_e$, $f_f$ and $f_g$ a set of three auxiliary machines (TV, 4), $\{e, f, g, h\}$ respectively;
- Figures 9 and 10 may show a method for starting up all or part of said spinning mill S, according to an embodiment of the present invention; and,

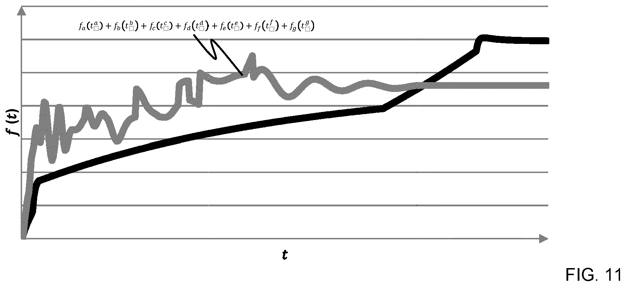

- Figure 11 represents an example of a state of the art, when all machines are started up at the same moment.

In the figures and in the remainder of the description, the same references represent identical or similar elements. In addition, the various elements are not represented to scale so as to favor the clarity of the figures. Furthermore, the different embodiments and variants are not mutually exclusive and can be combined with one another.

**Detailed description**

In a spinning mill, different process may take place in order to make yarn, like blending, opening, carding, roving, and/or spinning, for example. Each transformation may be done by a specific group of machines, which may have specific needs. In this instance, a spinning mill S may comprise a set of main machines (M,j), designated *"M"* and comprising "j" machines, wherein "j" may belong to natural numbers, and/or a set of auxiliary machines (TV, *l*), designated *"N"* and comprising "*l*" machines, wherein "*l*" may belong to natural numbers. For instance, said set of main machines (M,j) may comprise machines, they may not transform raw materials and/or they are needed to feed between them, like machine, that may be configured to transport like package transport systems, air compressor, a mixing machine like UNImix and/or UNIblend, vacuum system or can transport systems that may transport cans from the card to the draw frame or from the draw frame to the rotor spinning machine for instance, and/or to stock raw materials, fibers, or yarns. Conversely, said set of auxiliary machines (N, *l*) may comprise at least one auxiliary machine configured to produce and/or to transform raw materials, fibers, or yarns, like Cards, Combing machines for example. Of course, this categorization may be changed according to the need of said spinning mill S and may be define by production priorities and/or quality priorities.

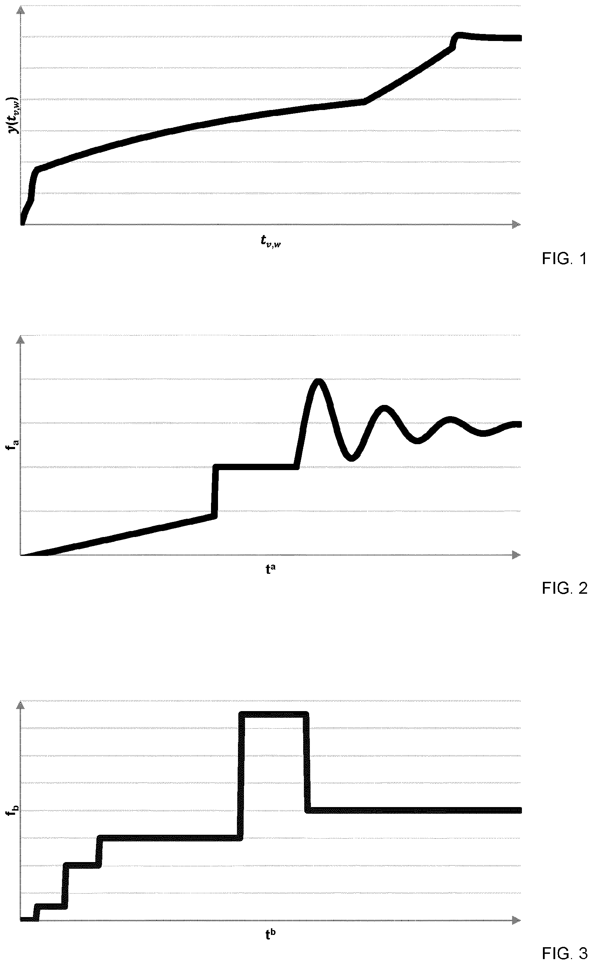

Said set of main machines (M,j) may comprise at least one main machine $(M, i)$, wherein *"(M, i)"* may designate a machine of said set of main machines (M,j), and said at least one main machine $(M, i)$ may include a main functional characteristic $f_{(M,i)}\left(t_{v-i}^{(M,i)}\right)$. Said main functional characteristic $f_{(M,i)}\left(t_{v-i}^{(M,i)}\right)$ may comprise a weight $f_{(M,i)}\left(u_{v-i}^{(M,i)}\right)$, a coil weight $f_{(M,i)}\left(c_{v-i}^{(M,i)}\right)$, $f_{(N,k)}\left(c_{w-k}^{(N,k)}\right)$, a reference weight $f_{(M,i)}\left(v_{v-i}^{(M,i)}\right)$, a Tape weight $f_{(M,i)}\left(w_{v-i}^{(M,i)}\right)$, a production $f_{(M,i)}\left(p_{v-i}^{(M,i)}\right)$ or at least one groups of the previous and may be illustrated by one of the figs. 2-4. As it may be construed, *"M, i"* may mean said at least one main machine $(M, i)$ of the main set of main machines (M,j), *"v - i"* may designate a specific period, sequence or time of the main functional characteristic.

As depicted in figure 1, said spinning mill S may have an operating parameter $y(t_{v,w})$, like voltage $U(t_{v,w})$, current $I(t_{v,w})$, power $P(t_{v,w})$, humidity $H(t_{v,w})$, and/or temperature $T(t_{v,w})$, and said method may establish said operating parameter $y(t_{v,w})$ for a predetermined time period $t_{v,w}$ or time point $t_{v,w}$ as a limit. *"$t_{v,w}$"* may designate a specific period, sequence or time of the starting up sequence of said set of main machines (M,j), and these operating parameter $y(t_{v,w})$, and a limit operating parameter $y(t'_{j,l})$, like limit voltage $U(t'_{j,l})$, limit current $I(t'_{j,l})$, limit power $P(t'_{j,l})$, limit humidity $H(t'_{j,l})$, and/or limit temperature $T(t'_{j,l})$, and these limit operating parameters may define the limit of said spinning mill S, when all or part of said set of main machines (M,j) and/or said set of auxiliary machines (N, *l*) may be started up.

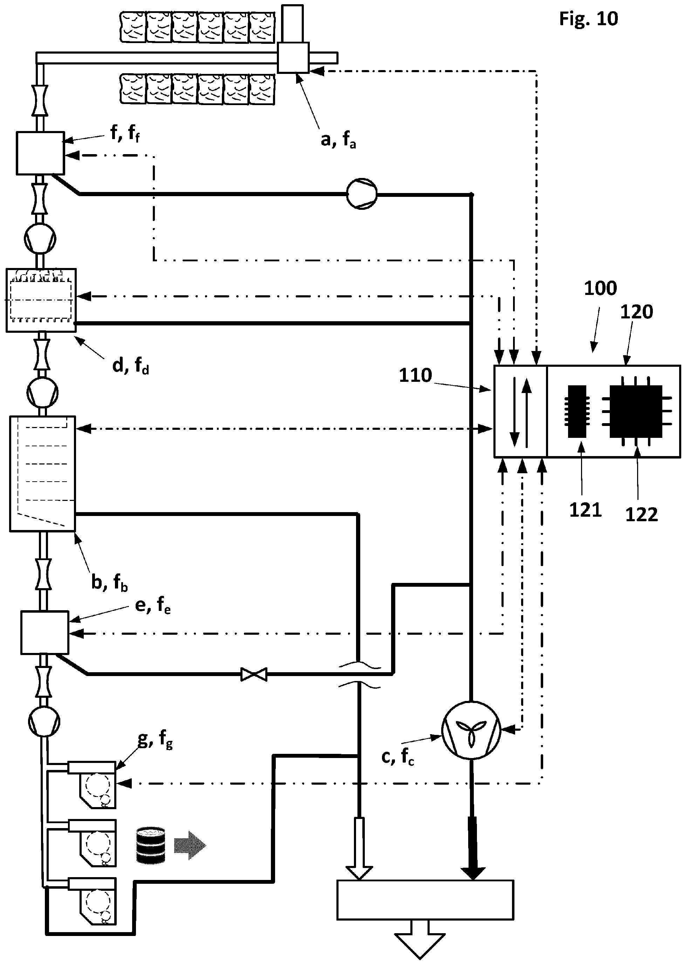

As aforementioned, after a power failure, it may be really difficult to start up said spinning mill S. If all machines are started up together at the same time, as shown in fig. 10, said operating parameter $y(t_{v,w})$ may collapse due to the load and, said spinning mill S may not restart quickly and may increase the down time, the costs and/or the damage.

Therefore the present invention provides a method for starting up all or part of said spinning mill S, which may start up said at least one main machine (M, i), alone or in groups, while a sum $\Sigma_i^v f_{(M,i)}\left(t_{v-i}^{(M,i)}\right)$ comprising said main functional characteristics $f_{(M,i)}\left(t_{v-i}^{(M,i)}\right)$ of said at least one started up main machine (M, i) may be inferior or equal to said operating parameters $y(t_v)$ for a given period, given sequence or given time $t_v$. Thus, said spinning mill S may be restarted quickly without putting a heavy load on the power grid, for example, and at the same time may keep costs and/or damage as low as possible.

Said method may select an amount of machine among said at least one main machine (M, i) and/or said at least one auxiliary machine (N, k) to start up alone or in groups during a specific period or sequence $t_{v,w}$ or at a specific time $t_{v,w}$, and said method may iterate a selection and/or increment v, i.e. the number of selected said at least one started up main machine (M, i) and/or said set of auxiliary machines (N, l) until said operating parameters $y(t_{v,w})$ may have reach the limit of said spinning mill S, i.e. said limit operating parameter $y(t'_{j,l})$. A comparison of said operating parameter $y(t_{j,l})$ with said sum of said main functional characteristic $f_{(M,i)}\left(t_{j-i}^{(M,i)}\right)$, and/or said auxiliary functional characteristic $f_{(N,k)}\left(t_{l-k}^{(N,k)}\right)$ of said amount of selected machines may occur for each iteration and/or incrementation for example. Once the selection may have been completed, said amount of selected machines may be started up during said predetermined time period $t_{v,w}$ or at said time point $t_{v,w}$, such as said sum of said functional characteristics of said selected machines may be inferior or equal to said operating parameters $y(t_{v,w})$. Thus, said computer implemented method may measure the consumption and may start up the loads, i.e. said at least one main machine (M, i) and/or said at least one auxiliary machine (N, k), in a certain order as it may be the most favorable and/or effective for said operating parameters $y(t_{v,w})$, respectively for the resource capacity of said spinning mill S.

Indeed, after said method may have iterated said sum and/or incremented v, w such as said spinning mill S may comprise a next operating parameter $y(t_{v+1,w})$, $y(t_{v,w+1})$, $y(t_{v+1,w+1})$ and said operating parameter $y(t_v)$, $y(t_w)$, $y(t_{v,w})$ may be different to said next operating parameters $y(t_{v+1,w})$, $y(t_{v,w+1})$, $y(t_{v+1,w+1})$.

$$y(t_v) \neq y(t_{v+1})$$

$$y(t_w) \neq y(t_{w+1})$$

$$y(t_{v,w}) \neq y(t_{v+1,w}) \neq y(t_{v,w+1}) \neq y(t_{v+1,w+1})$$

In other words, said method may start up all or part of a spinning mill S by starting up simultaneously or sequentially said at least one main machine (M, i) and/or said set of auxiliary machines (N, l) alone or in groups such as to respect said operating parameter $y(t_{v,w})$, wherein v, w designating some of the machines of said set of main machines (M,j) and/or said set of auxiliary machines (N, l) alone or in groups, and/or said limit operating parameter $y(t'_{j,l})$ of said spinning mill S, among limit voltage $U(t'_{j,l})$, limit current $I(t'_{j,l})$ and/or limit power $P(t'_{j,l})$, for instance. Indeed, the peak power should be limited, because the provision of electric plant may cost a lot of money for the spinning mill S and may threaten with a power failure. In example of Figure 10, if all machines are started up at the same moment, it may be clear that the sum of all machines may be higher than the limit of said spinning mill S.

The following formula may exemplify an embodiment of said method of the present invention, wherein said set of auxiliary machines (N, l) may not be taken in account, since said method may start up all or part of said set of main machines (M,j) at the beginning for instance:

$$y(t_v) \geq \sum_i^v f_{(M,i)}\left(t_{v-i}^{(M,i)}\right)$$

$$\forall t_v \in \mathbb{R}^+, \forall i \leq v \in \mathbb{N}$$

In some circumstances, said at least one main machine (*M*, *i*) may comprise at least one first main machine (*M'*, *i'*) including a first main functional characteristic $f_{(M',i')}\left(t_{v-i'}^{(M',i')}\right)$ and at least one second main machine (*M''*, *i''*) including a second main functional characteristic $f_{(M'',i'')}\left(t_{v-i''}^{(M'',i'')}\right)$, and said at least one first main machine (*M'*, *i'*) or said first main functional characteristic $f_{(M',i')}\left(t_{v-i'}^{(M',i')}\right)$ may be configured to be started up before said at least one second main machine (*M''*, *i''*) or said second main functional characteristic $f_{(M'',i'')}\left(t_{v-i''}^{(M'',i'')}\right)$, therefore said method may start up all or part of a spinning mill S by starting up simultaneously or sequentially said at least one main machine (*M*, *i*) alone or in groups.

$$t_{v-i'}^{(M',i')} < t_{v-i''}^{(M'',i'')}$$

$$M = M' \cup M''$$

Once all said at least one main machine (*M*, *i*) and/or said set of auxiliary machines (*N*, *l*) may be started up and may have reached their operating regime, said method may no more iterate said sum and/or increment *v, w*, i.e. the number of said at least one started up main machine (*M*, *i*) and/or said set of auxiliary machines (*N*, *l*) until said operating parameters $y(t_{v,w})$ may have reach the limit of said spinning mill S, i.e. said limit operating parameter $y(t'_{j,l})$. The following definition may exemplify an embodiment of said method of the present invention, wherein said set of auxiliary machines (*N*, *l*) may not be taken in account:

$$\begin{cases} y(t_v) \geq \sum_{i}^{v} f_{(M,i)}\left(t_{v-i}^{(M,i)}\right); \ \forall t_v \in \mathbb{R}^+, \forall i \leq v \in \mathbb{N} \\ \exists v \in \mathbb{N} \mid y(t_{v+1}) - y(t_v) \cong 0 \ \Leftrightarrow \ y(t'_j) \cong y(t_v) \cong y(t_{v+1}) \end{cases}$$

For example, after a power failure, said method may start up said at least one main machine (*M*, *i*) alone or in groups of said spinning mill S, having a set of 3 main machines (*M*, 3), {*a,b,c*}, simultaneously or sequentially such as to respect said operating parameter $y(t_v)$ and/or said limit operating parameter $y(t'_j)$ of said spinning mill S, as follow:

$$y(t_v) \geq \sum_{i}^{v} f_{(M,i)}\left(t_{v-i}^{(M,i)}\right)$$

$$y(t_0) \geq f_b\left(t_0^b\right)$$

$$y(t_1) \geq f_a\left(t_0^a\right) + f_b\left(t_1^b\right) \neq y(t_0)$$

$$y(t_2) \geq f_c\left(t_0^c\right) + f_a\left(t_1^a\right) + f_b\left(t_2^b\right) \neq y(t_1)$$

$$y(t_3) \geq f_c(t_1^c) + f_a(t_2^a) + f_b(t_3^b) \neq y(t_2)$$

$$y(t_4) \geq f_c(t_2^c) + f_a(t_3^a) + f_b(t_4^b) \neq y(t_3)$$

$$y(t_5) \geq f_c(t_3^c) + f_a(t_4^a) + f_b(t_5^b) \neq y(t_4)$$

$$y(t_6) \geq f_c(t_4^c) + f_a(t_5^a) + f_b(t_6^b) \cong y(t_5)$$

$$y(t'_3) \cong y(t_6) \cong y(t_5)$$

As already mentioned, said spinning mill S may comprise said set of auxiliary machines (*N, l*) having said at least one auxiliary machine *(N, k)*. Said at least one auxiliary machine *(N, k)* may be started up alone or in groups while said sum $\sum_k^w f_{(N,k)}\left(t_{w-k}^{(N,k)}\right)$ comprising said auxiliary functional characteristics $f_{(N,k)}\left(t_{w-k}^{(N,k)}\right)$ of said at least one started up auxiliary machine *(N, k)* may be inferior or equal to said operating parameters $y(t_{v,w})$.

$$y(t_{v,w}) \geq \sum_i^v f_{(M,i)}\left(t_{v-i}^{(M,i)}\right) + \sum_k^w f_{(N,k)}\left(t_{w-k}^{(N,k)}\right) \neq y(t'_{j,l})$$

$$\forall\, t_{v,w} \in \mathbb{R}^+, \forall\, i \leq v \in \mathbb{N}, \forall\, k \leq w \in \mathbb{N}$$

In some cases, said method may start simultaneously or sequentially said at least one auxiliary machines (*N, l*) alone or in groups additionally or alternatively to said at least one main machine (*M, i*) such as to respect said operating parameter $y(t_{j,l})$ and/or at least one limit of said operating parameter $y(t'_{j,l})$ of said spinning mill S. For some reasons, said method may start some said at least one main machine (*M, i*) before or simultaneously with some said at least one auxiliary machines (*N, l*), and on top of that, said at least one auxiliary machines *(N, k)* may comprise at least one first auxiliary machine *(N', k')* including a first auxiliary functional characteristic $f_{(N',k')}\left(t_{w-k'}^{(N',k')}\right)$ and at least one second auxiliary machine *(N", k")* including a second auxiliary functional characteristic $f_{(N'',k'')}\left(t_{w-k''}^{(N'',k'')}\right)$ wherein said first auxiliary functional characteristic $f_{(N',k')}\left(t_{w-k'}^{(N',k')}\right)$ may be configured to be started up before said second auxiliary functional characteristic $f_{(N'',k'')}\left(t_{w-k''}^{(N'',k'')}\right)$.

$$t_{w-k'}^{(N',k')} < t_{w-k''}^{(N'',k'')}$$

$$N = N' \cup N''$$

$$S = M \cup N$$

For example:

$$y(t_{2,1}) \geq f_a(t_1^{a''}) + f_{c'}(t_2^{c'}) + f_{d''}(t_0^{d''}) + f_{e'}(t_1^{e'}) \neq y(t_{1,1})$$

In the following example, said method may start up said at least one main machine (M, i) alone or in groups of said spinning mill S, having a set of 3 main machines (M, 3), {a, b, c}, simultaneously or sequentially with said at least one auxiliary machines (N, l), having a set of 3 auxiliary machines (TV, 3), {d, e, f}, such as to respect said operating parameter $y(t_{v,w})$ and/or said limit operating parameter $y(t'_{j,l})$ of said spinning mill S, as the following formula may depict an embodiment of the present invention:

$$y(t_{v,w}) \geq \sum_{i}^{v} f_{(M,i)}(t_{v-i}^{(M,i)}) + \sum_{k}^{w} f_{(N,k)}(t_{w-k}^{(N,k)})$$

$$y(t_{0,0}) \geq f_c(t_0^c) + f_e(t_0^e)$$

$$y(t_{0,1}) \geq f_c(t_0^c) + f_f(t_0^f) + f_e(t_1^e) \neq y(t_{0,0})$$

$$y(t_{1,1}) \geq f_a(t_0^a) + f_c(t_1^c) + f_f(t_0^f) + f_e(t_1^e) \neq y(t_{0,1})$$

$$y(t_{2,1}) \geq f_b(t_0^b) + f_a(t_1^a) + f_c(t_2^c) + f_f(t_0^f) + f_e(t_1^e) \neq y(t_{1,1})$$

$$y(t_{2,2}) \geq f_b(t_0^b) + f_a(t_1^a) + f_c(t_2^c) + f_d(t_0^d) + f_f(t_1^f) + f_e(t_2^e) \neq y(t_{2,1})$$

$$\ldots$$

$$y(t_{5,7}) \geq f_b(t_3^b) + f_a(t_4^a) + f_c(t_5^c) + f_d(t_5^d) + f_f(t_6^f) + f_e(t_7^e) \cong y(t_{5,6})$$

$$y(t'_{3,3}) \cong y(t_{5,7}) \cong y(t_{5,6})$$

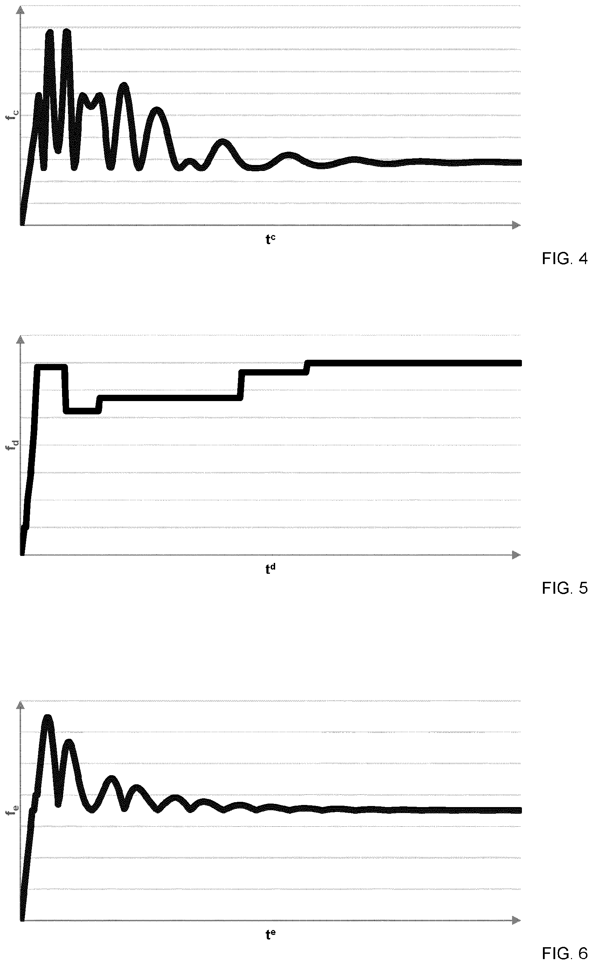

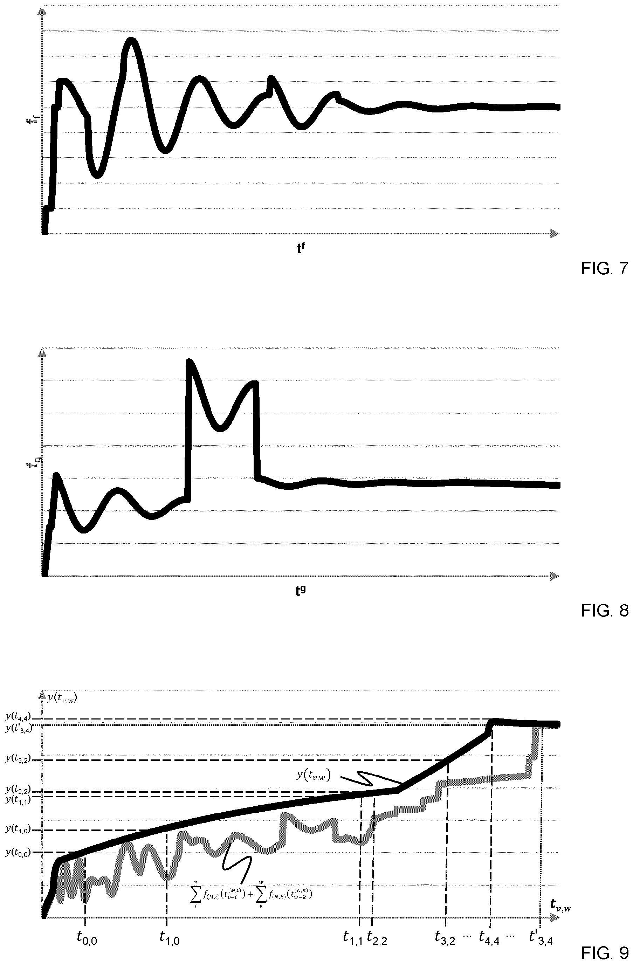

Figs. 9 and 10 may illustrate another example, wherein said spinning mill S may have a set of 3 main machines (M, 3), {a, b, c}, which may be an Bale Opener a, a mixer **b**, and a fan c, and a set of 4 auxiliary machines (TV, 4), {d, e, f, g}, a cleaner d, a card condenser e, a condenser f, and a card g which may be such as to respect said operating parameter $y(t_{v,w})$. Figs. 2-4 may illustrate said main functional characteristic of $f_a$, $f_b$ and $f_c$, and/or figs. 5-8 may depict said auxiliary functional characteristic of $f_d$, $f_e$, $f_f$ and $f_g$. The following formula may illustrate said figure 9:

$$y(t_{v,w}) \geq \sum_{i}^{v} f_{(M,i)}(t_{v-i}^{(M,i)}) + \sum_{k}^{w} f_{(N,k)}(t_{w-k}^{(N,k)})$$

$$y(t_{0,0}) \geq f_c(t_0^c)$$

$$y(t_{1,0}) \geq f_c(t_1^c) + f_e(t_0^e) \neq y(t_{0,0})$$

$$y(t_{1,1}) \geq f_c(t_1^c) + f_e(t_1^e) + f_f(t_0^f) + f_g(t_0^g) \neq y(t_{1,0})$$

$$y(t_{2,2}) \geq f_b(t_0^b) + f_c(t_2^c) + f_d(t_0^d) + f_e(t_2^e) + f_f(t_1^f) + f_g(t_1^g) \neq y(t_{1,1})$$

$$y(t_{3,2}) \geq f_a(t_0^a) + f_b(t_1^b) + f_c(t_3^c) + f_d(t_0^d) + f_e(t_2^e) + f_f(t_1^f) + f_g(t_1^g) \neq y(t_{2,2})$$

$$\dots$$

$$y(t_{5,3}) \geq f_a(t_2^a) + f_b(t_3^b) + f_c(t_5^c) + f_d(t_1^d) + f_e(t_3^e) + f_f(t_2^f) + f_g(t_2^g) \neq y(t_{4,3})$$

$$y(t'_{3,4}) \cong y(t_{5,4}) \cong y(t_{5,3})$$

In the example of fig. 10, for example, all machine of said set of 3 main machines $(M, 3)$, $\{a, b, c\}$, and said set of 4 auxiliary machines $(TV, 4)$, $\{d, e, f, g\}$ may communicate via a communication device 110 with a Central Unit 100, which may comprise control device 120 having a storage elements 121 and a processing unit 122, which may implement said method according to one embodiment of the present invention and/or may execute said computer implemented method according to one embodiment of the present invention. At the beginning, i.e. $t_{0,0}$, said fan c may be start up first, follow by said card condenser e, at $t_{1,0}$ for example. Said fan c and said card condenser e may communicate 110 some data regarding their power consumption, for example, with said Central Unit 100.

Said processing unit 122 may receive data information and/or to transmit a startup command to said at least one machine of said set of main machines $(M, 3)$ and/or said set of auxiliary machines $(TV, 4)$. When said processing unit 122 receive the information that said sum comprising said main functional characteristics ( $f_{(M,i)}\left(t_{v-i}^{(M,i)}\right)$ ) and/or said auxiliary functional characteristics ( $f_{(N,k)}\left(t_{w-k}^{(N,k)}\right)$ ) of said at least one started up machine is inferior or equal to said operating parameters ($y(t_{1,0})$), Said control device 120 may command the startup of said condenser f and of said card g.

After $t_{1,1}$, when conditions are right, a mixer **b** and cleaner d may be started up for example, before said Bale Opener a may be started up. As it can be understood, the same reasonings may apply mutatis mutandis with said at least one first main machine $(M', i')$ including a first main functional characteristic $f_{(M',i')}\left(t_{v-i'}^{(M',i')}\right)$, said at least one second main machine $(M'', i'')$ including a second main functional characteristic $f_{(M'',i'')}\left(t_{v-i''}^{(M'',i'')}\right)$, said at least one first auxiliary machine $(N', k')$ including a first auxiliary functional characteristic $f_{(N',k')}\left(t_{w-k'}^{(N',k')}\right)$ and said at least one second auxiliary machine $(N'', k'')$ including a second auxiliary functional characteristic $f_{(N'',k'')}\left(t_{w-k''}^{(N'',k'')}\right)$.

During the process, although said at least one machine among said at least one main machine, said at least one first main machine, said at least one second main machine, said at least one auxiliary machine, said at least one first auxiliary machine and/or at least one second auxiliary machine may communicate and/or may sense, preferably in real-time, said functional characteristic among said main functional characteristic, said first main functional characteristic, said second main functional characteristic, said auxiliary functional characteristic, said first auxiliary functional characteristic and/or said auxiliary functional characteristic respectively, such as said at least one machine may give in real-time feedback about said functional characteristic, it may become more and more difficult to start a machine rather than another without causing another potential power failure while respecting said next operating parameters $y(t_{v+1,w})$, $y(t_{v,w+1})$, $y(t_{v+1,w+1})$ and/or said limit operating parameters $y(t'_{j,l})$ of said spinning mill S, since some machine's parameter may have changed and/or since some machine may be newly available. A determination of at least one next machine among said at least one main machine $(M, i)$, said at least one first main machine $(M', i')$, said at least one second main machine $(M'', i'')$, said at least one auxiliary machine $(N, k)$, said at least one first auxiliary machine $(N', k')$ and/or at least one second auxiliary machine $(N'', k'')$ may occur such as said sum comprising the functional characteristic of said at least one started up next machine may be inferior or equal to said next operating parameters $y(t_{v+1,w}), y(t_{v,w+1}), y(t_{v+1,w+1})$ and/or to said limit operating parameters $y(t'_{j,l})$. The following formula may describe an embodiment of said determination of the present invention.

$$y(t_{v,w+1}) \geq \sum_{i?}^{j} f_{(M?,i?)}\left(t_{j-i?}^{(M?,i?)}\right) + \sum_{k?}^{l} f_{(N?,k?)}\left(t_{l-k?}^{(N?,k?)}\right)$$

In order to find an optimum, said determination may simulate different configurations and/or may take in account said newly available machine among said at least one main machine (M, i) and/or said at least one auxiliary machine (N, k) into said sum, such as to respect said next operating parameters $y(t_{v+1,w})$, $y(t_{v,w+1})$, $y(t_{v+1,w+1})$ and/or said limit operating parameters $y(t'_{j,l})$ of said spinning mill S. Said simulation may try to start up alone or in group said at least one next machine among said at least one main machine (M, i), said at least one first main machine (M", i'), said at least one second main machine (M", i"), said at least one auxiliary machine (N, k), said at least one first auxiliary machine (N', k') and/or at least one second auxiliary machine (N", k") in order to compare the different configurations and with or without taking in account said newly available machine.

Said simulation may also permutate at least two next machines among said at least one main machine (M, i), said at least one first main machine (M', i'), said at least one second main machine (M", i"), said at least one auxiliary machine (N, k), said at least one first auxiliary machine (N', k') and/or at least one second auxiliary machine (N", k") to start up in order to find different configurations and/or arrangements by changing the starting up order among said at least one main machine (M, i) and/or said at least one auxiliary machine (N, k) with a view to respect said next operating parameters $y(t_{v+1,w})$, $y(t_{v,w+1})$, $y(t_{v+1,w+1})$ and/or said limit operating parameters $y(t'_{j,l})$ of said spinning mill S.

Additionally, or alternatively, said simulation may combine at least two next machines such as to find the optimum size of a group of said at least two next machines starting up. Of course, an optimum size of a group may comprise at least two next machines, at least one machine or also no machine of said at least one main machine (M, i) and/or said at least one auxiliary machine (N, k). As it may be construed from the present description, said method may start up said at least one next machine among said at least one main machine (M, i), said at least one first main machine (M", i'), said at least one second main machine (M", i"), said at least one auxiliary machine (N, k), said at least one first auxiliary machine (N', k') and/or at least one second auxiliary machine (N", k") alone, sequentially, simultaneously and/or in groups. "Group" may mean a composition of different machines among said at least one main machine (M, i), said at least one first main machine (M", i'), said at least one second main machine (M", i"), said at least one auxiliary machine (N, k), said at least one first auxiliary machine (N', k') and/or at least one second auxiliary machine (N", k"), and "sequentially" may mean a machine and/or a group starting up after another.

## Claims

1. Method for starting up all or part of a spinning mill (5) comprising a set of main machines ((M,j)); wherein said spinning mill (5) comprises an said operating parameters ($y(t_v)$) and a limit operating parameter ($y(t_j)$) and wherein said set of main machines ((M,j)) comprises at least one main machine ((M, i)) including a main functional characteristic (

$$f_{(M,i)}\left(t_{v-i}^{(M,i)}\right)$$

), wherein said at least one main machine ((M, i)) is started up alone or in groups while a sum (

$$\sum_i^v f_{(M,i)}\left(t_{v-i}^{(M,i)}\right)$$

) comprising said main functional characteristics ($f_{(M,i)}\left(t_{v-i}^{(M,i)}\right)$) of said at least one started up main machine ((M, i)) is inferior or equal to said operating parameters ($y(t_v)$) and/or of said limit operating parameter ($y(t'_j)$).

2. Method according to claim 1, wherein said spinning mill (5) comprises a next operating parameter ($y(t_{v+1})$) and said an operating parameter ($y(t_v)$) is different to said next operating parameters ($y(t_{v+1})$).

3. Method according to claim 1 or 2, wherein said spinning mill (5) comprising a set of auxiliary machines ((N, l)); wherein said set of auxiliary machines ((N, l)) comprises at least one auxiliary machine ((N, k)) including an auxiliary functional characteristic ($f_{(N,k)}\left(t_{w-k}^{(N,k)}\right)$), wherein said at least one auxiliary machine ((N, k)) is started up alone or in groups while said sum ($\sum_i^j f_{(M,i)}\left(t_{v-i}^{(M,i)}\right)$) comprising said auxiliary functional characteristics ($f_{(N,k)}\left(t_{w-k}^{(N,k)}\right)$) of the at least one started up auxiliary machine ((N, k)) is inferior or equal to said operating parameters ($y(t_{v,w})$) and/or of said limit operating parameter ($y(t'_{j,l})$).

4. Method according to any of the preceding claims 1 to 3, wherein said at least one main machine ((M, i)) comprises at least one first main machine ((M', i')) including a first main functional characteristic ($f_{(M',i')}\left(t_{v-i'}^{(M',i')}\right)$) and at least one second main machine $((M'', i''))$ including a second main functional characteristic ($f_{(M'',i'')}\left(t_{v-i''}^{(M'',i'')}\right)$), wherein said first main functional characteristic ($f_{(M',i')}\left(t_{v-i'}^{(M',i')}\right)$) is configured to be started up before said second main functional characteristic ($f_{(M'',i'')}\left(t_{v-i''}^{(M'',i'')}\right)$).

5. Method according to any of the preceding claims 1 to 4, wherein said at least one auxiliary machines $((N, k))$ comprises at least one first auxiliary machine $((N', k'))$ including a first auxiliary functional characteristic ($f_{(N',k')}\left(t_{w-k'}^{(N',k')}\right)$) and at least one second auxiliary machine $((N'', k''))$ including a second auxiliary functional characteristic ($f_{(N'',k'')}\left(t_{w-k''}^{(N'',k'')}\right)$) wherein said first auxiliary functional characteristic ($f_{(N',k')}\left(t_{w-k'}^{(N',k')}\right)$) is configured to be started up before said second auxiliary functional characteristic ($f_{(N'',k'')}\left(t_{w-k''}^{(N'',k'')}\right)$).

6. Method according to any of the preceding claims 1 to 5, said method comprises a determination of at least one next machine among said at least one main machine $((M, i))$, said at least one first main machine $((M', i'))$, said at least one second main machine $((M'', i''))$, said at least one auxiliary machine $((N, k))$, said at least one first auxiliary machine $((N', k'))$ and/or at least one second auxiliary machine $((N'', k''))$ to start up alone or in groups such as said sum comprising the functional characteristic of said at least one started up next machine is inferior or equal to said next operating parameters $(y(t_{v+1,w}), y(t_{v,w+1}), y(t_{v+1,w+1}))$.

7. Method according to claim 6, wherein said determination comprises a simulation of said sum inferior or equal to said operating parameters $(y(t_{v,w}))$ comprising said at least one next machine to start up alone or in group among said at least one main machine $((M'', i))$, said at least one first main machine $((M'', i'))$, said at least one second main machine $((M'', i''))$, said at least one auxiliary machine $((N, k))$, said at least one first auxiliary machine $((N', k'))$ and/or at least one second auxiliary machine $((N'', k''))$.

8. Method according to claim 7, wherein said simulation comprises a permutation of at least two next machines among said at least one main machine $((M, i))$, said at least one first main machine $((M', i'))$, said at least one second main machine $((M'', i''))$, said at least one auxiliary machine $((N, k))$, said at least one first auxiliary machine $((N', k'))$ and/or at least one second auxiliary machine $((N'', k''))$ to start up in groups such as said sum comprising the functional characteristic of said at least two started up next machine is inferior or equal to said next operating parameters $(y(t_{v+1,w}), y(t_{v,w+1}), y(t_{v+1,w+1}))$.

9. Method according to claim 7 or 8, wherein said simulation comprises a combination of at least two next machines among said at least one main machine $((M'', i))$, said at least one first main machine $((M', i'))$, said at least one second main machine $((M'', i''))$, said at least one auxiliary machine $((N, k))$, said at least one first auxiliary machine $((N', k'))$ and/or at least one second auxiliary machine $((N'', k''))$ to start up in groups such as said sum comprising the functional characteristic of said at least two started up next machine is inferior or equal to said next operating parameters $(y(t_{v+1,w}), y(t_{v,w+1}), y(t_{v+1,w+1}))$.

10. Method according to any of the preceding claims 1 to 9, wherein said at least one first main machine $((M', i'))$ and/or said at least one second main machine $((M'', i''))$ comprises at least one main machine configured to transport and/or to stock raw materials, fibers, or yarns.

11. Method according to any of the preceding claims 1 to 10, wherein said at least one first auxiliary machine $((N', k'))$ and/or at least one second auxiliary machine $((N'', k''))$ comprises at least one auxiliary machine configured to produce and/or to transform raw materials, fibers, or yarns.

12. Method according to any of the preceding claims 1 to 11, wherein said at least one machine among said at least one main machine $((M, i))$ and/or said at least one auxiliary machine $((N, k))$, and/or said at least one next machine among said at least one first main machine $((M'', i''))$, said at least one second main machine $((M'', i''))$, said at least one first auxiliary machine $((N', k'))$ and/or at least one second auxiliary machine $((N'', k''))$ are configured to start up simultaneously or sequentially.

13. Method according to any of the preceding claims 1 to 12, wherein said operating parameter $(y(t_{v,w}))$ and/or said next operating parameters $(y(t_{v+1,w}), y(t_{v,w+1}), y(t_{v+1,w+1}))$ comprises a voltage $(U(t_{v,w}))$, a current $(I(t_{v,w}))$, a power $(P(t_{v,w}))$, a humidity $(H(t_{v,w}))$, a Temperature $(T(t_{v,w}))$, a next voltage $(U(t_{v+1,w}), U(t_{v,w+1}), U(t_{v+1,w+1}))$, a next current $(I(t_{v+1,w}), I(t_{v,w+1}), I(t_{v+1,w+1}))$, a next power $(P(t_{v+1,w}), P(t_{v,w+1}), P(t_{v+1,w+1}))$, a next humidity $(H(t_{v+1,w}), H(t_{v,w+1}), H(t_{v+1,w+1}))$, a next Temperature $(T(t_{v+1,w}), T(t_{v,w+1}), T(t_{v+1,w+1}))$ or at least one groups of the previous.

14. Method according to any of the preceding claims 1 to 13, wherein said functional characteristic among said main functional characteristic ( $f_{(M,i)}\left(t_{v-i}^{(M,i)}\right)$ ) and/or said auxiliary functional characteristic ( $f_{(N,k)}\left(t_{w-k}^{(N,k)}\right)$ ) comprises a weight ( $f_{(M,i)}\left(u_{v-i}^{(M,i)}\right)$ , $f_{(N,k)}\left(u_{w-k}^{(N,k)}\right)$ ), a reference weight ( $f_{(M,i)}\left(v_{v-i}^{(M,i)}\right), f_{(N,k)}\left(v_{w-k}^{(N,k)}\right)$ ), a Tape weight ( $f_{(M,i)}\left(w_{v-i}^{(M,i)}\right), f_{(N,k)}\left(w_{w-k}^{(N,k)}\right)$ ), a coil weight ( $f_{(M,i)}\left(c_{v-i}^{(M,i)}\right)$ , $f_{(N,k)}\left(c_{w-k}^{(N,k)}\right)$ ), a production ( $f_{(M,i)}\left(p_{v-i}^{(M,i)}\right), f_{(N,k)}\left(p_{w-k}^{(N,k)}\right)$ ) or at least one groups of the previous.

15. Computer implemented method for starting up all or part of a spinning mill (5) comprising a set of main machines $((M,j))$ and/or a set of auxiliary machines $((N, l))$; wherein said spinning mill (5) comprises an operating parameter $(y(t_{v,w}))$, wherein said set of main machines $((M,j))$ comprises at least one main machine $((M, i))$ including a main functional characteristic ( $f_{(M,i)}\left(t_{v-i}^{(M,i)}\right)$ ), and/or wherein said set of auxiliary machines $((N, l))$ comprises at least one auxiliary machine $((N, k))$ including an auxiliary functional characteristic ( $f_{(N,k)}\left(t_{w-k}^{(N,k)}\right)$ ), wherein said computer implemented method comprising a/an:

   - establishment said operating parameter $(y(t_{v,w}))$ for a predetermined time period $(t_{v,w})$ or time point $(t_{v,w})$ as a limit;
   - selection an amount of machine among said at least one main machine $((M, i))$ and/or said at least one auxiliary machine $((N, k))$ to start up alone or in groups;
   - comparison of said operating parameter $(y(t_{v,w}))$ with a sum of said main functional characteristic ( $f_{(M,i)}\left(t_{v-i}^{(M,i)}\right)$ ), and/or said auxiliary functional characteristic ( $f_{(N,k)}\left(t_{w-k}^{(N,k)}\right)$ ) of said amount of selected machines;
   - starting up said amount of selected machines such as said sum of said functional characteristics of said selected machines is inferior or equal to said operating parameters $(y(t_{v,w}))$ at said predetermined time period $(t_{v,w})$ or said time point $(t_{v,w})$.

16. Central unit (100) for starting up all or part of a spinning mill (5) and comprising:

   - a communication device (110); said communication device is configured to communicate with at least one machine of a set of main machines $((M,j))$ and/or a set of auxiliary machines $((N, l))$ of a spinning mill (5); and,
   - a control device (120); said control device comprising storage elements (121) and a processing unit (122) configured to receive data information and/or to transmit a startup command to said at least one machine of said set of main machines $((M,j))$ and/or said set of auxiliary machines $((N, l))$, where said control device is adapted to control said startup of said at least one machine;

   said processing unit is configured to implement said method according to any of the preceding claims 1 to 14 and/or to execute said computer implemented method according to claim 15 such as to start up said at least one machine alone or in a group while a sum ($\sum_{i}^{v} f_{(M,i)}\left(t_{v-i}^{(M,i)}\right)$) comprising said main functional characteristics ($f_{(M,i)}\left(t_{v-i}^{(M,i)}\right)$)

and/or said auxiliary functional characteristics ($f_{(N,k)}\left(t_{w-k}^{(N,k)}\right)$) of said at least one started up machine is inferior or equal to said operating parameters ($y(t_{v,w})$) and/or of said limit operating parameter ($y(t'_{j,l})$) of said spinning mill (S).

FIG. 1

FIG. 2

FIG. 3

FIG. 4

FIG. 5

FIG. 6

FIG. 7

FIG. 8

FIG. 9

Fig. 10

$$f_a(t_\square^a) + f_b(t_\square^b) + f_c(t_\square^c) + f_d(t_\square^d) + f_e(t_\square^e) + f_f(t_\square^f) + f_g(t_\square^g)$$

FIG. 11

Europäisches
Patentamt

European
Patent Office

Office européen
des brevets

# EUROPEAN SEARCH REPORT

Application Number

EP 23 17 7753

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 798 418 B1 (SIEMENS AG [DE]) 28 September 2016 (2016-09-28) * paragraphs [0010] - [0029] * | 1-16 | INV. G05B19/418 |
| X | DE 10 2012 104493 A1 (KRAUSS MAFFEI TECH GMBH [DE]) 29 November 2012 (2012-11-29) * paragraphs [0004] - [0014], [0026] - [0038] * | 1-16 | |
| A | EP 4 105 368 A1 (RIETER AG MASCHF [CH]) 21 December 2022 (2022-12-21) * paragraphs [0037] - [0058] * | 1-16 | |

TECHNICAL FIELDS
SEARCHED (IPC)

G05B

The present search report has been drawn up for all claims

| Place of search | Date of completion of the search | Examiner |
|---|---|---|
| The Hague | 12 January 2024 | Prokopiou, Platon |

EPO FORM 1503 03.82 (P04C01)

# EP 4 474 929 A1

## ANNEX TO THE EUROPEAN SEARCH REPORT
## ON EUROPEAN PATENT APPLICATION NO.

EP 23 17 7753

This annex lists the patent family members relating to the patent documents cited in the above-mentioned European search report.
The members are as contained in the European Patent Office EDP file on
The European Patent Office is in no way liable for these particulars which are merely given for the purpose of information.

12-01-2024

| Patent document cited in search report | | Publication date | Patent family member(s) | | Publication date |
|---|---|---|---|---|---|
| EP 2798418 | B1 | 28-09-2016 | EP | 2798418 A1 | 05-11-2014 |
| | | | WO | 2013143584 A1 | 03-10-2013 |
| DE 102012104493 | A1 | 29-11-2012 | NONE | | |
| EP 4105368 | A1 | 21-12-2022 | EP | 4105368 A1 | 21-12-2022 |
| | | | WO | 2022263995 A1 | 22-12-2022 |

For more details about this annex : see Official Journal of the European Patent Office, No. 12/82